# EUROPEAN PATENT APPLICATION

(11) **EP 4 636 546 A1**
(43) Date of publication of application: **22.10.2025**
(21) Application number: 25162585.1
(22) Date of filing: 10.03.2025
(51) Int. Cl.: G06F 3/01, G06F 3/0354

(54) **INFORMATION PROCESSING SYSTEM, INFORMATION PROCESSING METHOD, AND PROGRAM**

(30) Priority: 19.04.2024 JP 2024068325
(71) Applicant: Lenovo (Singapore) Pte. Ltd., New Tech Park 556741 (SG)
(72) Inventor: YOSHITOMI, Keiichi, Kanagawa (JP)
(74) Representative: Openshaw & Co.

(57) **Abstract**

An object of the present invention is to create a sensation similar to that of actually writing on a writing medium.

An information processing system includes a contact parameter detection unit configured to detect one or more contact parameters corresponding to a contact state of a pen-shaped input device with respect to an operation target surface, and a feedback control unit configured to determine a contact state of a pen tip of the pen-shaped input device with respect to the operation target surface based on the contact parameter and drive, when the contact state is determined to be a moving state in which the pen tip of the pen-shaped input device is moving while in contact with the operation target surface, a tactile sensation reproduction part in the pen-shaped input device to reproduce a tactile sensation corresponding to the moving state and drive, at a timing when the contact state is determined to be a movement start state in which the pen tip of the pen-shaped input device starts moving from a stationary state while in contact with the operation target surface, the tactile sensation reproduction part to reproduce a tactile sensation corresponding to the movement start state.

## Description

### BACKGROUND OF THE INVENTION

### Field of the Invention

The present invention relates to an information processing system, an information processing method, and a program.

### Description of the Related Art

It is known that a pen-like stylus (pen-shaped input device) capable of providing tactile feedback by generating a vibration through drive of a tactile actuator is used as an input device when performing input to an interactive display system (for example, see Japanese Unexamined Patent Application Publication (Translation of PCT Application) No. 2017-537395).

### SUMMARY OF THE INVENTION

Since a tactile sensation of sliding a pen tip on a writing medium such as paper is obtained in a simulated manner by emitting a vibration from the pen-shaped input device, a user who performs input using the pen-shaped input device is capable of obtaining a sensation similar to that of writing on the writing medium.

When performing input using the pen-shaped input device, there is an aspect that it is preferable for a sensation to be as close as possible to that of writing on a real writing medium.

In consideration of the above-described problem, an object of the present invention is to create a sensation similar to that of actually writing on a writing medium when performing input using a pen-shaped input device.

An information processing system according to a fist aspect of the present invention for solving the above-described problem includes: a contact parameter detection unit configured to detect one or more contact parameters corresponding to a contact state of a pen-shaped input device with respect to an operation target surface; and a feedback control unit configured to determine a contact state of a pen tip of the pen-shaped input device with respect to the operation target surface based on the contact parameter and execute first feedback control of driving, when the contact state is determined to be a moving state in which the pen tip of the pen-shaped input device is moving while in contact with the operation target surface, a tactile sensation reproduction part in the pen-shaped input device to reproduce a tactile sensation corresponding to the moving state and second feedback control of driving, at a timing when the contact state is determined to be a movement start state in which the pen tip of the pen-shaped input device starts moving from a stationary state while in contact with the operation target surface, the tactile sensation reproduction part to reproduce a tactile sensation corresponding to the movement start state.

An information processing method for an information processing system according to a second aspect of the present invention includes: a contact parameter detection step of, via a contact parameter detection unit, detecting one or more contact parameters corresponding to a contact state of a pen-shaped input device with respect to an operation target surface; and a feedback control step of, via a feedback control unit, determining a contact state of a pen tip of the pen-shaped input device with respect to the operation target surface based on the contact parameter and executing first feedback control of driving, when the contact state is determined to be a moving state in which the pen tip of the pen-shaped input device is moving while in contact with the operation target surface, a tactile sensation reproduction part in the pen-shaped input device to reproduce a tactile sensation corresponding to the moving state and second feedback control of driving, at a timing when the contact state is determined to be a movement start state in which the pen tip of the pen-shaped input device starts moving from a stationary state while in contact with the operation target surface, the tactile sensation reproduction part to reproduce a tactile sensation corresponding to the movement start state.

A program according to a third aspect of the present invention causes a computer in an information processing system to function as: a contact parameter detection unit configured to detect one or more contact parameters corresponding to a contact state of a pen-shaped input device with respect to an operation target surface; and a feedback control unit configured to determine a contact state of a pen tip of the pen-shaped input device with respect to the operation target surface based on the contact parameter and execute first feedback control of driving, when the contact state is determined to be a moving state in which the pen tip of the pen-shaped input device is moving while in contact with the operation target surface, a tactile sensation reproduction part in the pen-shaped input device to reproduce a tactile sensation corresponding to the moving state and second feedback control of driving, at a timing when the contact state is determined to be a movement start state in which the pen tip of the pen-shaped input device starts moving from a stationary state while in contact with the operation target surface, the tactile sensation reproduction part to reproduce a tactile sensation corresponding to the movement start state.

The above-described aspects of present invention can create a sensation similar to that of actually writing on a writing medium when performing input using a pen-shaped input device.

### BRIEF DESCRIPTION OF THE DRAWINGS

FIG. 1 is a diagram illustrating an external configuration example of an information processing system in the present embodiment.
FIG. 2 is a diagram illustrating a change in frictional force at a pen tip over time as a writing operation is started in the present embodiment.
FIG. 3 is a diagram illustrating an outline of feedback control in the present embodiment.
FIG. 4 is a diagram illustrating an example of a movement trajectory of a pen tip of a pen-shaped input device on a panel surface in the present embodiment.
FIG. 5 is a diagram illustrating a hardware configuration example of an information processing apparatus and the pen-shaped input device in the present embodiment.
FIG. 6 is a diagram illustrating a functional configuration example of the information processing apparatus and the pen-shaped input device in the present embodiment.
FIG. 7 is a diagram illustrating a functional configuration example corresponding to drive of a vibration unit and a sound output unit due to a feedback signal in the present embodiment.
FIG. 8 is a flowchart illustrating an example of a processing procedure executed by the information processing apparatus and the pen-shaped input device in the present embodiment in relation to tactile feedback.

### DETAILED DESCRIPTION OF THE INVENTION

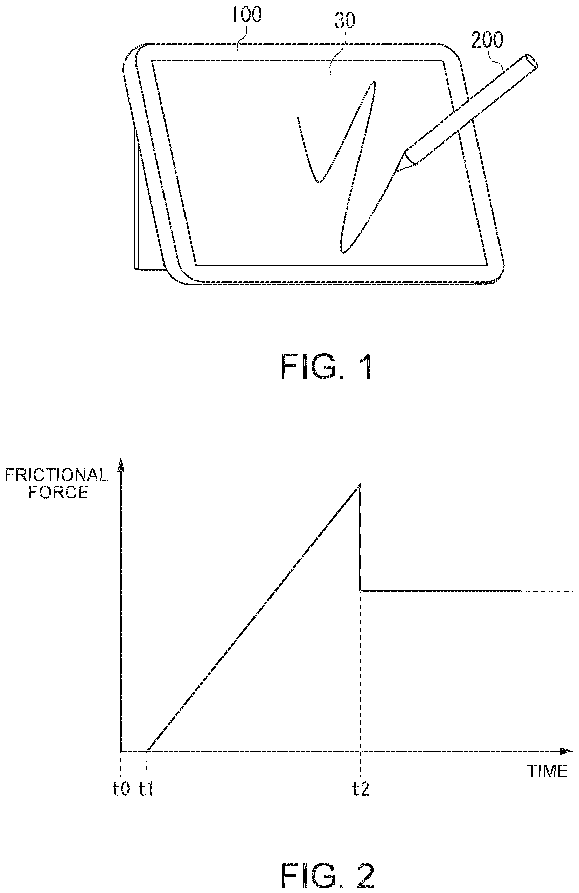

FIG. 1 illustrates an external configuration example of an information processing system of the present embodiment. As illustrated in FIG. 1, the information processing system of the present embodiment includes an information processing apparatus 100 and a pen-shaped input device 200.

The information processing apparatus 100 is capable of executing information processing in response to an input operation performed by the pen-shaped input device 200. The information processing apparatus 100 in FIG. 1 is an example of a tablet terminal, a laptop personal computer, or the like.

The information processing apparatus 100 includes a touch panel display unit 30. The touch panel display unit 30 is a part in which a touch panel and a display are combined. The touch panel display unit 30 displays an image on a panel surface (display surface: an example of an operation target surface), and is capable of being operated by bringing an operating body such as a pen-shaped input device or a finger into contact with the panel surface.

The pen-shaped input device 200 is a pen-shaped input device that is used by a user to perform an operation on the touch panel of the touch panel display unit 30 of the information processing apparatus 100.

The user grips the pen-shaped input device 200 and moves a pen tip to be in contact with the panel surface of the touch panel display unit 30, thereby performing a handwritten input operation of a character, a picture, a figure, or the like.

As the operation using the pen-shaped input device 200, a pointing operation on a user interface image displayed on the touch panel display unit 30 and the like may also be possible.

A detection method of the pen-shaped input device 200 through the touch panel of the touch panel display unit 30 of the present embodiment is not particularly limited, and examples thereof include a capacitive method, an electromagnetic induction method, and the like. In the following description, a case where a capacitive method is used will be described as an example.

An application that enables an input operation using the pen-shaped input device 200 (pen operation-enabled application) is installed in the information processing apparatus 100.

The pen operation-enabled application may be able to, for example, execute processing of displaying, on the touch panel display unit 30, characters or drawings drawn in response to a handwritten input operation such as character input or drawing performed by bringing the pen tip of the pen-shaped input device 200 into contact with the touch panel display unit 30, processing of converting the characters or drawings drawn by the operation into data, or the like.

In addition, in the information processing system of the present embodiment, the pen-shaped input device 200 emits a vibration and a sound (writing sound) in response to an operation (writing operation) performed in accordance with writing. The vibration and writing sound emitted by the pen-shaped input device 200 allow the user to feel a tactile sensation similar to that of writing on a writing medium such as paper, thereby enabling the user to obtain a sensation similar to that of writing on the writing medium with a real writing instrument.

In the following description, the generation of a vibration and a sound when the writing operation is being performed by the pen-shaped input device 200 is also referred to as "tactile feedback".

Next, an outline of the tactile feedback in the present embodiment will be described.

FIG. 2 illustrates a change in frictional force at a writing instrument tip over time as the user actually starts the writing operation. At time point t0, the user has brought a writing instrument (for example, a pencil or the like) tip into contact with a writing medium such as paper, but the writing instrument tip remains stationary without moving. Then, the user starts an operation of moving the writing instrument tip on the writing medium in response to start of the writing from time point t1 after a certain time has elapsed since time point t0.

Here, when the operation of moving the writing instrument tip is started, a static frictional force is generated because the writing instrument tip is in contact with a writing medium surface so as to be pressed against the surface with a certain force. Therefore, in a period from time point t1 to time point t2 after a certain time has elapsed since time point t1, even in a case where the user applies a force to move the writing instrument tip, the writing instrument tip does not move on the writing medium and remains stationary, while the static frictional force increases over time.

Then, in a case where the writing instrument tip starts moving at time point t2, the static frictional force that has been increasing up until time point t2 is sharply decreased, and a certain kinetic frictional force is generated in response to the movement of the writing instrument tip. Such a change in frictional force is obtained as a strong vibration or sound (writing sound) in actual writing.

When the pen tip of the pen-shaped input device 200 is moved, tactile feedback in the form of the vibration or sound may be provided at a certain level, but the level of tactile feedback may be changed depending on a movement state of the pen tip. For example, the level of the tactile feedback may be changed to be increased in accordance with an increase in movement speed of the pen tip.

However, in the level change of the tactile feedback according to the movement speed of the pen tip, the movement speed at a timing of the start of the movement of the pen tip is low, so that the tactile feedback at the timing of the start of the movement of the pen tip is also small. That is, the level change of the tactile feedback according to the movement speed of the pen tip fails to reproduce, as the tactile feedback, the change from the large static frictional force that occurs instantaneously at the timing when the writing instrument tip starts moving to the kinetic frictional force corresponding to the movement speed, as illustrated in FIG. 2.

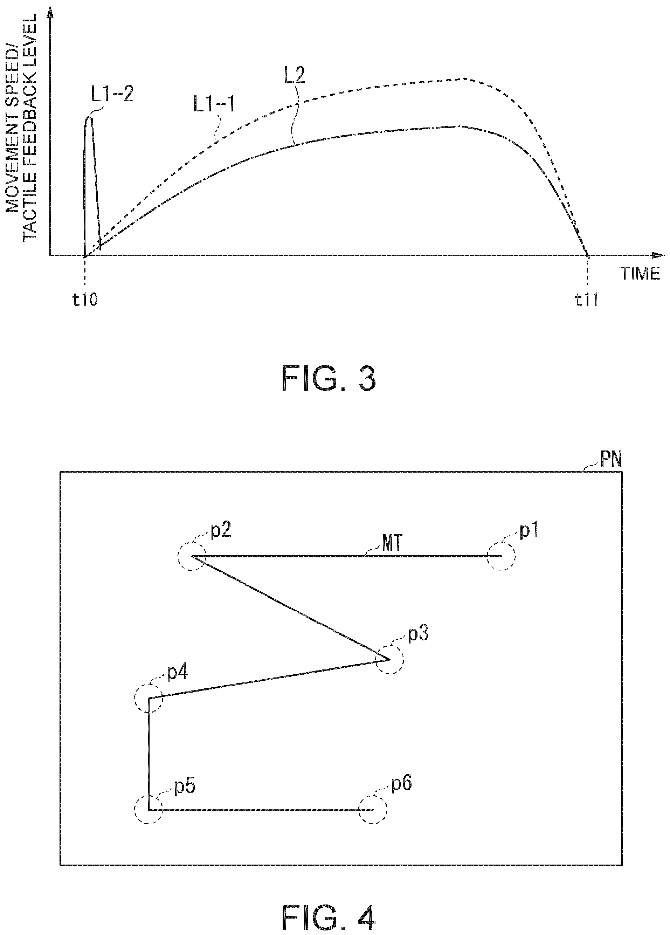

Therefore, in the present embodiment, the tactile feedback is controlled in accordance with the movement of the pen tip of the pen-shaped input device 200 as illustrated in FIG. 3 below.

In FIG. 3, lines L1-1 and L1-2 indicate a change over time in levels of two feedback signals output in response to the tactile feedback of the present embodiment. In addition, a line L2 indicates a change over time in movement speed detected for the pen tip.

Time point t10 is a timing when the pen tip of the pen-shaped input device 200 that has been in a stationary state until time point t10 starts moving in response to the writing operation of the user. In response to the start of the movement of the pen tip at time point t10, output of a first feedback signal at a level that changes in accordance with the movement speed of the pen tip is started as illustrated by the line L1-1. The first feedback signal becomes a zero level and the output thereof is stopped at time point t11 when the movement of the pen tip is stopped. In addition, in response to the start of the movement of the pen tip at time point t10, a second feedback signal having an instantaneous peak is also output as illustrated by the line L1-2.

In this manner, in the present embodiment, composite tactile feedback is provided by two feedback signals, that is, the first feedback signal and the second feedback signal from when the pen tip starts moving until the pen tip stops.

With such tactile feedback, in addition to the reproduction of the vibration or writing sound according to the movement speed of the pen tip, the vibration or writing sound corresponding to the static frictional force that instantaneously increases at the timing of the start of the movement of the pen tip of the pen-shaped input device 200 is also reproduced. As a result, it is possible to create a sensation similar to that of actually writing on the writing medium when performing input using the pen-shaped input device 200.

FIG. 4 illustrates an example of a movement trajectory MT of the pen tip of the pen-shaped input device 200 on a panel surface PN through the writing operation of the user. The movement trajectory MT of FIG. 4 is started from a start point p1, changes its movement direction at direction change points p2, p3, p4, and p5 in this order, and ends at an end point p6.

According to such a movement trajectory MT, the movement of the pen tip is temporarily stopped for each of the direction change points p2, p3, p4, and p5, and then the movement is restarted. In this case, the tactile feedback based on the first feedback signal with a level corresponding to the movement speed from the start of the movement of the pen tip to the stop of the movement is performed for each of sections p1 to p2, p2 to p3, p3 to p4, and p5 to p6. In addition, the tactile feedback corresponding to the static frictional force based on the second feedback signal is performed for each of the start point p1 and the direction change points p2, p3, p4, and p5.

In the present embodiment, a peak level of the second feedback signal may be a predetermined fixed value. Alternatively, the peak level of the second feedback signal may be set based on a predetermined contact parameter among detection values (contact parameters) obtained by detecting a predetermined contact state of the pen tip with respect to the panel surface.

Specifically, the information processing apparatus 100 of the present embodiment may include, as the contact parameters, a speed (movement speed) at which the pen tip moves on the panel surface, a pressure (pen pressure) when the pen tip is in contact with the panel surface, a movement direction of the pen tip on the panel surface, and an inclination angle of the pen-shaped input device 200 with respect to the panel surface when the pen tip is in contact with the panel surface.

The static frictional force when the movement of the pen tip is started by the writing operation is increased in accordance with the pen pressure when the movement is about to be started. Therefore, the information processing apparatus 100 may set the peak level of the second feedback signal according to the contact parameter as the pen pressure.

In addition, the static frictional force when the movement of the pen tip is started by the writing operation is changed according to, for example, the inclination angle of the pen-shaped input device 200 with respect to the panel surface. Therefore, the information processing apparatus 100 may set the peak level of the second feedback signal according to the contact parameter as the inclination angle.

In addition, the static frictional force when the movement of the pen tip is started by the writing operation may also change, for example, depending on the movement direction of the pen tip on the panel surface in response to the writing operation. Therefore, the information processing apparatus 100 may set the peak level of the second feedback signal according to the contact parameter as the movement direction.

In addition, the information processing apparatus 100 may set the peak level of the second feedback signal by using two or more contact parameters among the contact parameters of the pen pressure, the inclination angle, and the movement direction in combination.

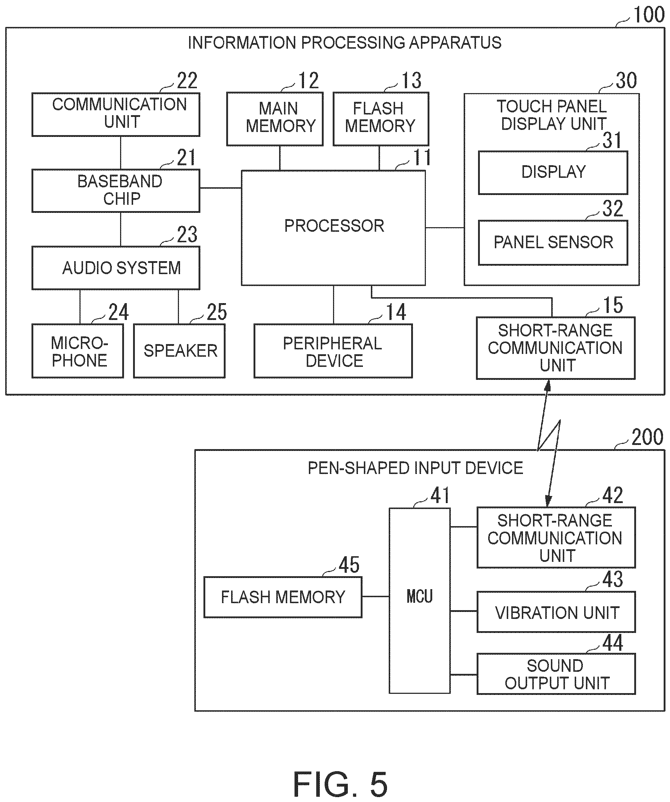

A hardware configuration example of the information processing apparatus 100 and the pen-shaped input device 200 will be described with reference to FIG. 5.

First, a hardware configuration example of the information processing apparatus 100 will be described. The information processing apparatus 100 in FIG. 5 includes a processor 11, a main memory 12, a flash memory 13, a peripheral device 14, a short-range communication unit 15, a baseband chip 21, a communication unit 22, an audio system 23, a microphone 24, a speaker 25, and the touch panel display unit 30.

The processor 11 is, for example, an application processor including a central processing unit (CPU). The processor 11 controls the entirety of the information processing apparatus 100.

The main memory 12 is a writable memory that is used as a reading area of an execution program of the processor 11 or as a work area in which processing data of the execution program is written. The main memory 12 includes, for example, a plurality of dynamic random access memory (DRAM) chips. The execution program includes an operating system (OS), various device drivers for hardware operation of peripheral devices, various services/utilities, an application program (application software), and the like.

The flash memory 13 is, for example, a flash electrically erasable programmable read only memory (EEPROM), and stores the OS, various drivers, various services/utilities, application program (hereinafter, referred to as an application), and various types of data.

The touch panel display unit 30 is a part that displays an image and allows an operation to be performed by the pen-shaped input device 200 with respect to the panel surface on which the image is displayed. The touch panel display unit 30 may be operated by an operating object other than the pen-shaped input device 200, such as a finger, but, here, a case where the operating object is the pen-shaped input device 200 will be described as an example.

The touch panel display unit 30 includes a display 31 and a panel sensor 32.

The display 31 is, for example, a liquid crystal display or an organic electro-luminescence (EL) display, and displays an image based on drawing data (display data) output from the processor 11.

The panel sensor 32 detects a contact state of the pen tip of the pen-shaped input device 200 with respect to a panel surface of the display 31. Specifically, the panel sensor 32 may be configured to detect a position on the panel surface where the pen tip of the pen-shaped input device 200 is in contact, a pressure applied by the pen tip in contact with the panel surface, a distance of the pen-shaped input device 200 from the panel surface, and the like. Such a detection method of the panel sensor 32 is not particularly limited, and examples thereof include a capacitive method, an electromagnetic induction method, and the like. In addition, the panel sensor 32 may have a configuration in which a plurality of such detection methods is used in combination.

The peripheral device 14 is, for example, a wireless local area network (WLAN) module, a global positioning system (GPS) module, and sensors such as an acceleration sensor, and the like.

The audio system 23 is, for example, an audio integrated circuit (IC), and inputs, records, reproduces, and outputs sound data. For example, the microphone 24 and the speaker 25 are connected to the audio system 23. The audio system 23 outputs, for example, sound data picked up by the microphone 24 to the processor 11 or the baseband chip 21.

In addition, the audio system 23 converts, for example, the sound data acquired from the processor 11 or the baseband chip 21 into a sound signal, and outputs the sound signal to the speaker 25.

The microphone 24 picks up a sound around the information processing apparatus 100. The microphone 24 picks up a sound such as user's voice for example, when performing audio fusion with another terminal.

The speaker 25 outputs various sounds to an outside of the information processing apparatus 100. The speaker 25 outputs (emits) a sound received from another terminal, for example, when performing audio fusion with the other terminal.

The baseband chip 21 is, for example, a dedicated IC that controls a wireless communication such as a 4th generation mobile communication system (4G) or a 5th generation mobile communication system (5G).

The baseband chip 21 outputs, for example, the sound data received by the communication unit 22 as a sound from the speaker 25 by the audio system 23.

In addition, the baseband chip 21 acquires, for example, the sound data picked up by the microphone 24 via the audio system 23 and causes the communication unit 22 to output the sound data via the mobile communication system. In addition, the baseband chip 21 may transmit and receive input and output data for data communication via the mobile communication system to and from the processor 11.

The communication unit 22 is a wireless communication device including an antenna for performing wireless communication via the mobile communication system.

The short-range communication unit 15 is, for example, a Bluetooth (registered trademark) module, and performs short-range wireless communication with the pen-shaped input device 200.

Next, a hardware configuration example of the pen-shaped input device 200 will be described with reference to FIG. 5.

The pen-shaped input device 200 includes a micro controller unit (MCU) 41, a short-range communication unit 42, a vibration unit 43 (an example of a tactile sensation reproduction part), a sound output unit 44 (an example of a tactile sensation reproduction part), and a flash memory 45.

The short-range communication unit 42 is, for example, a Bluetooth (registered trademark) module, and performs short-range wireless communication with the information processing apparatus 100.

The MCU 41 includes a CPU, a memory such as a ROM or a RAM, I/O-related components, and the like, and executes control of the pen-shaped input device 200. The MCU 41 transmits and receives information transmitted and received by the short-range communication unit 42. In addition, the MCU 41 controls the generation of the vibration in the vibration unit 43 and the output of the sound from the sound output unit 44 such that the tactile feedback corresponding to the feedback signal (including the first feedback signal and the second feedback signal) transmitted from the information processing apparatus 100 is performed.

The vibration unit 43 is a part that includes, for example, an actuator and that vibrates in response to the input of the feedback signal from the MCU 41.

The sound output unit 44 is a part that includes, for example, a speaker and that outputs a sound in response to the input of the feedback signal from the MCU 41.

The flash memory 45 stores various types of data corresponding to the pen-shaped input device 200, such as a program or data of the feedback signal.

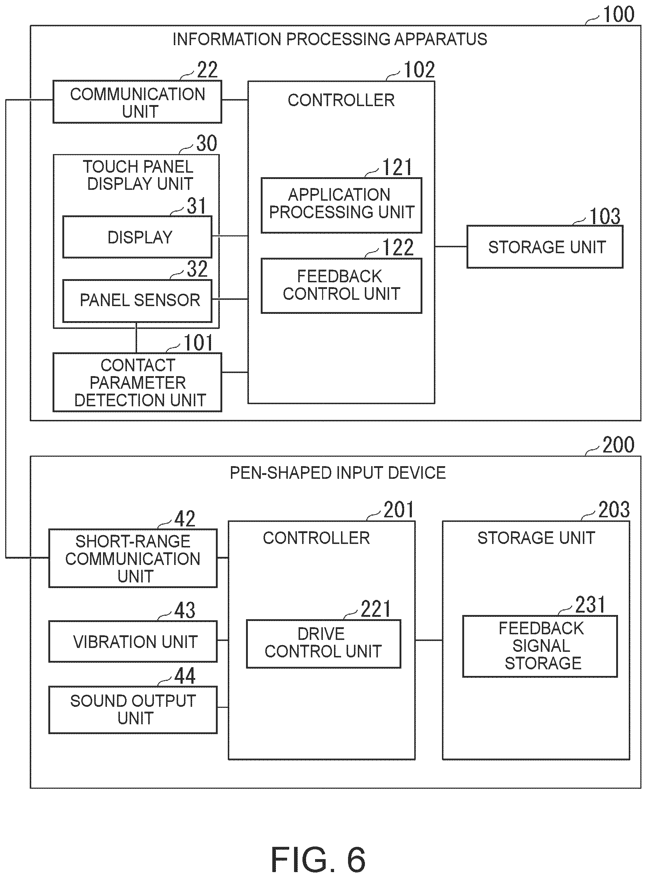

A functional configuration example of the information processing apparatus 100 and the pen-shaped input device 200 will be described with reference to FIG. 6. In FIG. 6, functional units that can be regarded as being equivalent to the parts in the hardware configuration of FIG. 5 are denoted by the same reference numerals as those in FIG. 5, and the description thereof will be appropriately omitted.

The functions of the information processing apparatus 100 illustrated in FIG. 6 may be realized by the processor 11 (FIG. 5) executing a program.

First, a functional configuration example of the information processing apparatus 100 will be described. The information processing apparatus 100 includes, as functional units, the communication unit 22, the touch panel display unit 30, a contact parameter detection unit 101, a controller 102, and a storage unit 103.

The contact parameter detection unit 101 detects a contact state of the pen tip of the pen-shaped input device 200 with respect to the panel surface of the touch panel display unit 30.

The contact parameter detection unit 101 outputs a parameter (contact parameter) detected in response to the contact state based on a detection signal output by the panel sensor 32. In the following description, a case where the contact parameter is, for example, the movement speed, the pen pressure, the movement direction, and the inclination angle, which are described above, will be described.

The controller 102 executes various types of control in the information processing apparatus 100. The controller 102 includes an application processing unit 121 and a feedback control unit 122.

The application processing unit 121 executes processing corresponding to the pen operation-enabled application.

When the writing operation of the pen-shaped input device 200 is performed as an operation for the pen operation-enabled application, pen operation information is input from the panel sensor 32 to the application processing unit 121. The application processing unit 121 performs processing such as drawing in response to the input of the pen operation information.

The feedback control unit 122 executes feedback control. The feedback control in the present embodiment is control of causing the pen-shaped input device 200 to generate a vibration as the tactile feedback.

The feedback control unit 122 of the present embodiment executes feedback control (second feedback control) for reproducing a vibration or sound generated in response to a change in frictional force when the pen tip of the pen-shaped input device 200 that has been stationary in contact with the panel surface starts moving, and feedback control (first feedback control) for reproducing a vibration or sound generated when the pen tip of the pen-shaped input device 200 is moving.

The feedback control unit 122 generates feedback control information based on the contact parameter output from the contact parameter detection unit 101. The feedback control information is information for controlling a drive control unit 221 of the pen-shaped input device 200 to generate tactile feedback using a vibration and sound. The feedback control unit 122 outputs (transmits) the generated feedback control information to the pen-shaped input device 200 via the communication unit 22.

The storage unit 103 stores various types of information corresponding to the information processing apparatus 100.

Next, a functional configuration example of the pen-shaped input device 200 will be described. The functions of the pen-shaped input device 200 illustrated in FIG. 6 may be realized by the MCU 41 (FIG. 5) executing a program.

The pen-shaped input device 200 includes, as functional units, the short-range communication unit 42, the vibration unit 43, the sound output unit 44, a controller 201, and a storage unit 203.

The controller 201 executes various types of control in the pen-shaped input device 200. The controller 201 includes the drive control unit 221.

The drive control unit 221 controls the vibration unit 43 such that a vibration as the tactile feedback is generated. In addition, the drive control unit 221 controls the sound output unit 44 such that a sound as the tactile feedback is generated.

In controlling the vibration unit 43 and the sound output unit 44, the drive control unit 221 inputs the feedback signal (including the first feedback signal and the second feedback signal) stored in a feedback signal storage 231 to the vibration unit 43 and the sound output unit 44.

The storage unit 203 stores various types of data corresponding to the pen-shaped input device 200. The storage unit 203 stores the feedback signal storage 231.

The feedback signal storage 231 stores a waveform that serves a feedback signal. The feedback signal storage 231 stores a waveform of the first feedback signal and a waveform of the second feedback signal. In addition, the first feedback signal and the second feedback signal stored in the feedback signal storage 231 may include a waveform of a vibration-responsive feedback signal used for vibrating the vibration unit 43 and a waveform of a sound-responsive feedback signal output as a sound from the sound output unit 44, respectively.

In addition, the waveform of the second feedback signal may be, for example, an impulse waveform. That is, the second feedback signal may be an impulse signal. Alternatively, the waveform of the second feedback signal may be a waveform having a steep peak at a time when a vibration or sound is generated due to a static frictional force when the movement of the pen tip is started.

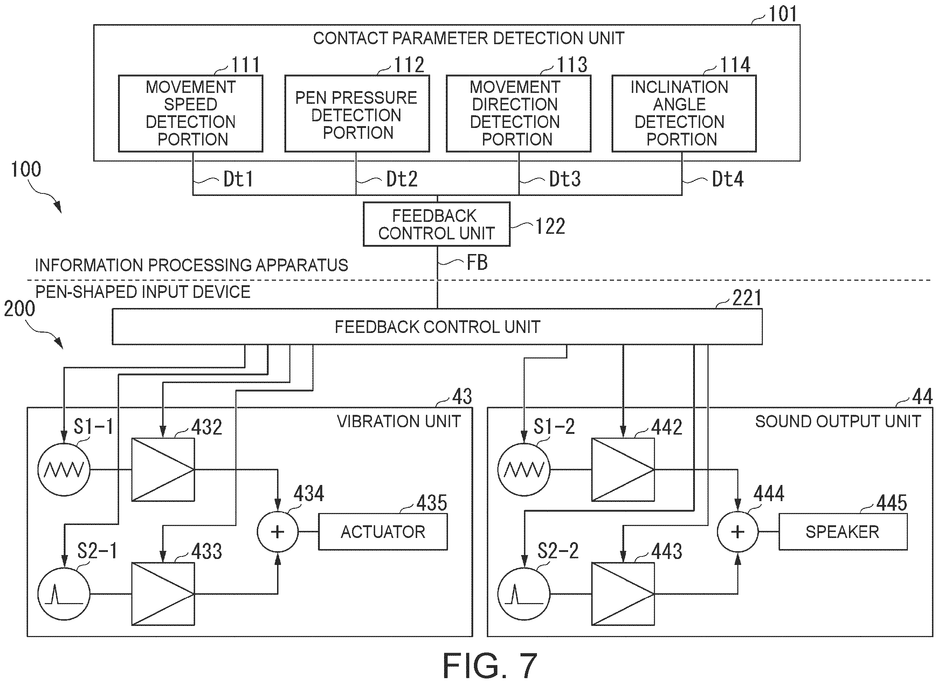

A functional configuration example corresponding to the drive of the vibration unit 43 and the sound output unit 44 due to the feedback signal will be described with reference to FIG. 7.

In the information processing apparatus 100, the contact parameter detection unit 101 includes a movement speed detection portion 111, a pen pressure detection portion 112, a movement direction detection portion 113, and an inclination angle detection portion 114.

The movement speed detection portion 111 detects a movement speed of the pen tip that moves while in contact with the panel surface. The movement speed detection portion 111 may detect the movement speed based on a movement amount per unit time of the contact position of the pen tip detected by the panel sensor 32. The movement speed detection portion 111 outputs a movement speed parameter Dt1 indicating the detected movement speed to the feedback control unit 122.

The pen pressure detection portion 112 detects a pressure (pen pressure) of the pen tip in contact with the panel surface. The pen pressure detection portion 112 may detect the pen pressure based on a value of the electrostatic capacitance at the contact position of the pen tip detected by the panel sensor 32. The pen pressure detection portion 112 outputs a pen pressure parameter Dt2 indicating the detected pen pressure to the feedback control unit 122.

The movement direction detection portion 113 detects a movement direction of the pen tip that moves while in contact with the panel surface. The movement direction detection portion 113 may detect the movement direction based on a direction in which the contact position of the pen tip detected by the panel sensor 32 moves. The movement direction detection portion 113 outputs a movement direction parameter Dt3 indicating the detected movement direction to the feedback control unit 122.

The inclination angle detection portion 114 detects an inclination angle of a main body of the pen-shaped input device 200 with respect to the panel surface in a state where the pen tip is in contact with the panel surface. The inclination angle detection portion 114 may detect the inclination angle based on a distribution of the electrostatic capacitance according to the main body of the pen-shaped input device 200 detected by the panel sensor 32 in the vicinity of the contact position of the pen tip. The inclination angle detection portion 114 outputs an inclination angle parameter Dt4 indicating the detected inclination angle to the feedback control unit 122.

In the information processing apparatus 100, the feedback control unit 122 generates feedback control information FB based on the input contact parameters (the movement speed parameter Dt1, the pen pressure parameter Dt2, the movement direction parameter Dt3, and the inclination angle parameter Dt4).

In the present embodiment, the feedback control unit 122 individually generates the feedback control information FB corresponding to the vibration unit 43 and the feedback control information FB corresponding to the sound output unit 44.

The feedback control unit 122 may control feedback control information common to the vibration unit 43 and the sound output unit 44.

The feedback control information FB includes a level of a vibration-responsive first feedback signal (vibration-responsive first level) and a level of a sound-responsive first feedback signal (sound-responsive first level). The feedback control unit 122 may set the vibration-responsive first level and the sound-responsive first level based on the movement speed parameter Dt1.

In addition, the feedback control information FB includes a level of a vibration-responsive second feedback signal (vibration-responsive second level) and a level of a sound-responsive second feedback signal (sound-responsive second level), in a case where the feedback control information FB is output in accordance with a timing of the start of the movement of the pen tip on the panel surface.

In the following description, when there is no particular distinction between the vibration-responsive first level and the sound-responsive first level, the vibration-responsive first level and the sound-responsive first level will be referred to as a first level. In addition, when there is no particular distinction between the vibration-responsive second level and the sound-responsive second level, the vibration-responsive first level and the sound-responsive first level will be referred to as a second level.

The feedback control unit 122 outputs (transmits) the generated feedback control information FB to the pen-shaped input device 200.

The drive control unit 221 drives the vibration unit 43 and the sound output unit 44 based on the input feedback control information FB.

In FIG. 7, a configuration example of the vibration unit 43 and the sound output unit 44 is illustrated.

The vibration unit 43 includes, for example, an amplifier 432, an amplifier 433, a mixer 434, and an actuator 435.

The vibration-responsive first feedback signal is input to the amplifier 432 as a signal source S1-1. The signal source S1-1 is generated based on a waveform of the vibration-responsive first feedback signal stored in the feedback signal storage 231. The amplifier 432 changes the input vibration-responsive first feedback signal to a level instructed by the drive control unit 221 and outputs the first feedback signal.

The vibration-responsive second feedback signal is input to the amplifier 433 as a signal source S2-1. The signal source S2-1 is generated based on a waveform of the vibration-responsive second feedback signal stored in the feedback signal storage 231. The amplifier 433 changes the input vibration-responsive second feedback signal to a level instructed by the drive control unit 221 and outputs the first feedback signal.

The mixer 434 combines the first feedback signal output from the amplifier 432 and the second feedback signal output from the amplifier 433.

The actuator 435 vibrates in response to the feedback signal output from the mixer 434.

In response to such a configuration of the vibration unit 43, the drive control unit 221 performs control of inputting the signal source S1-1 of the vibration-responsive first feedback signal to the amplifier 432 and control of instructing the amplifier 432 of the level of the vibration-responsive first feedback signal, based on the vibration-responsive first level included in the feedback control information FB.

In addition, when the vibration-responsive second level is included in the feedback control information FB, based on the vibration-responsive second level, control of inputting the signal source S2-1 of the vibration-responsive second feedback signal to the amplifier 433 and control of instructing the amplifier 433 of the level of the vibration-responsive second feedback signal are performed.

The sound output unit 44 includes, for example, an amplifier 442, an amplifier 443, a mixer 444, and a speaker 445.

The sound-responsive first feedback signal is input to the amplifier 442 as a signal source S1-2. The signal source S1-2 is generated based on a waveform of the sound-responsive first feedback signal stored in the feedback signal storage 231. The amplifier 442 changes the input sound-responsive first feedback signal to a level instructed by the drive control unit 221 and outputs the first feedback signal.

The sound-responsive second feedback signal is input to the amplifier 443 as a signal source S2-2. The signal source S2-1 is generated based on a waveform of the sound-responsive second feedback signal stored in the feedback signal storage 231. The amplifier 443 changes the input sound-responsive second feedback signal to a level instructed by the drive control unit 221 and outputs the first feedback signal.

The mixer 444 combines the first feedback signal output from the amplifier 442 and the second feedback signal output from the amplifier 443.

The speaker 445 emits a sound corresponding to the feedback signal output from the mixer 444.

In response to such a configuration of the sound output unit 44, the drive control unit 221 performs control of inputting the signal source S1-2 of the sound-responsive first feedback signal to the amplifier 442 and control of instructing the amplifier 442 of the level of the sound-responsive first feedback signal, based on the sound-responsive first level included in the feedback control information FB.

In addition, when the sound-responsive second level is included in the feedback control information FB, based on the sound-responsive second level, control of inputting the signal source S2-2 of the sound-responsive second feedback signal to the amplifier 443 and control of instructing the amplifier 443 of the level of the sound-responsive second feedback signal are performed.

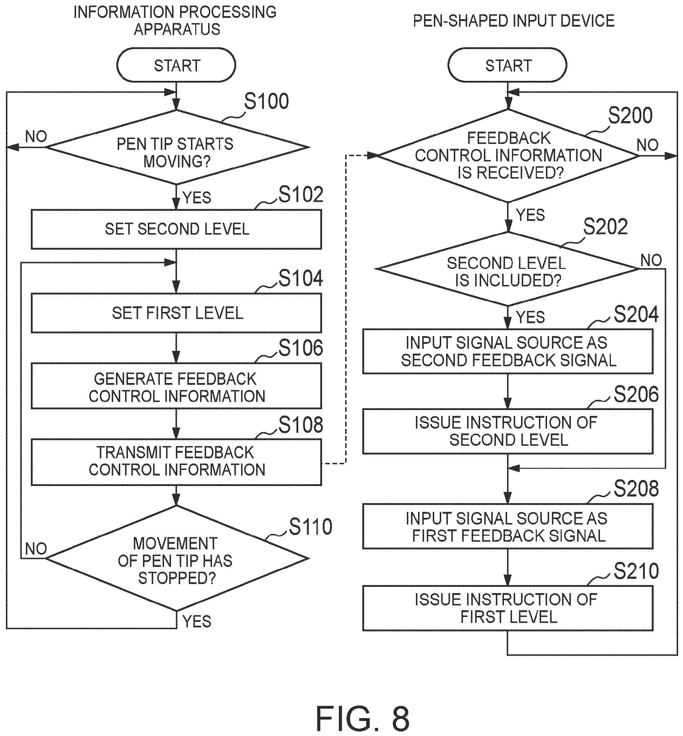

An example of a processing procedure executed by the information processing apparatus 100 and the pen-shaped input device 200 in relation to the tactile feedback will be described with reference to a flowchart of FIG. 8.

First, an example of a processing procedure of the information processing apparatus 100 will be described.
The feedback control unit 122 is configured to, when the processing in FIG. 8 is being executed, acquire the contact parameter (the movement speed parameter Dt1, the pen pressure parameter Dt2, the movement direction parameter Dt3, and the inclination angle parameter Dt4) detected by the contact parameter detection unit 101, for example, for each predetermined acquisition cycle (acquisition period). In this case, the feedback control unit 122 may acquire the contact parameters of one sample for each acquisition cycle (period), or may acquire the contact parameters corresponding to each of a plurality of sample cycles.

Step S100: In the information processing apparatus 100, the feedback control unit 122 waits for the pen tip of the pen-shaped input device 200 to move from a stopped state in contact with the panel surface to a state where the pen tip starts moving (movement start state), based on the contact parameters acquired at the current sample timing.

In this case, the feedback control unit 122 may determine that the pen tip has started moving, for example, when the movement speed parameter Dt1 in the contact parameters has changed from zero to a value greater than zero. Alternatively, the feedback control unit 122 may determine that the pen tip has started moving in response to the movement direction parameter Dt3 changing from a value that does not indicate the movement direction to a value indicating a certain movement direction because the pen tip is not moving (stopped). In addition, the feedback control unit 122 may determine whether or not the movement of the pen tip has started by using the movement speed parameter Dt1 and the movement direction parameter Dt3 in combination.

Step S102: In a case where the feedback control unit 122 determines that the pen tip has started moving in step S100, the feedback control unit 122 sets the levels of the vibration-responsive second feedback signal and the sound-responsive second feedback signal (second levels: vibration-responsive second level and sound-responsive second level).

The feedback control unit 122 may set the second level based on the pen pressure parameter Dt2. In actual writing, the vibration and sound generated when a tip part of a writing instrument starts moving become louder as a pen pressure on a writing target medium such as paper increases when the tip part of the writing instrument starts moving.

Further, in setting the second level, the feedback control unit 122 may also use, for example, an acceleration calculated based on a plurality of movement speed parameters Dt1 obtained during the current acquisition period.

Further, in setting the second level, the feedback control unit 122 may use, for example, a type of the writing instrument, a type of the writing target medium, or the like, which is set in the pen operation-enabled application.

Step S104: Next, the feedback control unit 122 sets the levels of the vibration-responsive first feedback signal and the sound-responsive first feedback signal (first levels: vibration-responsive first level and sound-responsive first level).

In this case, the feedback control unit 122 may set each of the vibration-responsive first level and the sound-responsive first level according to the movement speed parameter Dt1 acquired at a timing of the current sample period.

Further, in setting the vibration-responsive first level and the sound-responsive first level, the feedback control unit 122 may use at least a part of the pen pressure parameter Dt2, the movement direction parameter Dt3, or the inclination angle parameter Dt4. For example, the magnitude of the vibration or sound generated in accordance with the movement of the pen tip in actual writing may change depending on the pen pressure.

Further, in setting the first level, the feedback control unit 122 may use, for example, a type of the writing instrument, a type of the writing target medium, or the like, which is set in the pen operation-enabled application.

Step S106: The feedback control unit 122 generates the feedback control information FB including the second level set in step S102 and the first level set in step S104.

Step S108: The feedback control unit 122 transmits the feedback control information generated in step S106 to the pen-shaped input device 200.

Step S110: The feedback control unit 122 determines whether or not the movement of the pen tip started in step S100 has stopped. The feedback control unit 122 may determine that the movement of the pen tip has stopped in response to the fact that the movement speed parameter Dt1, which has been greater than 0 until the current time, is 0.

When it is determined that the pen tip is in a state (moving state) in which the pen tip is moving, that is, the movement is not stopped, the processing returns to step S104. That is, thereafter, the feedback control unit 122 executes a loop process of generating the feedback control information FB corresponding to the state where the pen tip is moving and transmitting the feedback control information FB to the pen-shaped input device 200 until the movement of the pen tip is stopped. The feedback control information FB generated in such a loop process does not include the second level.

On the other hand, when it is determined that the movement of the pen tip has stopped, the processing returns to step S100. In a case where the processing returns to step S100 in this way, the transmission of the feedback control information FB to the pen-shaped input device 200 is stopped until the movement of the pen tip is started again.

Next, an example of a processing procedure executed by the pen-shaped input device 200 will be described.

Step S200: In the pen-shaped input device 200, the drive control unit 221 waits to receive the feedback control information FB transmitted from the information processing apparatus 100 in step S108.

Step S202: In a case where the feedback control information FB is received, the drive control unit 221 determines whether or not the second level is included in the feedback control information FB received currently.

Step S204: In a case where it is determined in step S202 that the second level is included in the feedback control information FB, the drive control unit 221 inputs the signal sources S2-1 and S2-2 as the second feedback signals to the amplifiers 433 and 443, respectively.

Step S206: The drive control unit 221 instructs the amplifier 433 of the vibration-responsive second level and instructs the amplifier 443 of the sound-responsive second level.

By executing the processes of step S204 and step S206 as described above, the vibration or writing sound corresponding to the static frictional force generated when the movement of the pen tip is started is reproduced. In this case, the strength of the vibration and the volume of the writing sound are adjusted according to the static frictional force in response to the pen pressure when the pen tip starts moving, for example.

Step S208: After the process of step S206, or in a case where it is determined in step S202 that the second level is not included in the feedback control information FB, the drive control unit 221 inputs the signal sources S1-1 and S1-2 as the first feedback signals to the amplifiers 432 and 442, respectively.

Step S210: The drive control unit 221 instructs the amplifier 432 of the vibration-responsive first level and instructs the amplifier 442 of the sound-responsive first level.

By executing the processes of step S208 and step S210 as described above, the tactile sensation is reproduced such that the strength of the vibration and the volume of the writing sound are changed according to the movement speed of the pen tip during the movement.

Hereinafter, a modification example of the present embodiment will be described.

The tactile feedback may be performed by any one of the vibration or sound. In this case, the information processing apparatus 100 and the pen-shaped input device 200 may have a configuration corresponding to one of the tactile feedback of the vibration and the tactile feedback of the sound, and may not have a configuration corresponding to the other tactile feedback. Alternatively, for example, whether to use vibration or sound for the tactile feedback may be set according to a selection operation of the user, or a type of a writing instrument or a type of a writing target medium, which is set in the pen operation-enabled application.

The pen-shaped input device 200 may be provided with a predetermined functional unit included in the information processing apparatus 100 in the above-described embodiment. Alternatively, the information processing apparatus 100 may be provided with a predetermined functional unit included in the pen-shaped input device 200 in the above-described embodiment.

Specifically, for example, the pen-shaped input device 200 may be provided with the feedback control unit 122. In this case, the information processing apparatus 100 may be configured to transmit the contact parameter detected by the contact parameter detection unit 101 to the pen-shaped input device 200.

In addition, for example, the information processing apparatus 100 may be provided with the drive control unit 221. In this case, the drive control unit 221 may transmit, to the pen-shaped input device 200, a signal for issuing an instruction of the input of the feedback signal to the amplifiers (432, 433, 442, and 443) and a signal for issuing an instruction of the level set in each of the amplifiers (432, 433, 442, and 443).

A program for realizing the functions as the information processing apparatus 100, the pen-shaped input device 200, and the like described above may be recorded on a computer-readable recording medium, and the program recorded on the recording medium may be read into a computer system and executed to perform the processing as the information processing apparatus 100, the pen-shaped input device 200, and the like described above. Here, the expression "the program recorded on the recording medium is read into the computer system and executed" includes installation of the program on the computer system. The term "computer system" herein includes the OS or hardware such as peripheral devices. In addition, the term "computer system" may include a plurality of computer apparatuses connected via a network including a communication line such as the Internet, a WAN, a LAN, or a dedicated line. In addition, the term "computer-readable recording medium" refers to a portable medium such as a flexible disk, a magneto-optical disk, a ROM, or a CD-ROM, and a storage device such as a hard disk built in the computer system. As described above, the recording medium that stores the program may be a non-transitory recording medium such as a CD-ROM. In addition, the recording medium also includes an internal or external recording medium that is accessible from a distribution server to distribute the program. The code of the program stored in the recording medium of the distribution server may be different from the code of the program in a format executable by a terminal device. That is, as long as the program can be downloaded from the distribution server and installed in a format executable by the terminal device, the format in which the program is stored in the distribution server does not matter. A configuration may be used in which the program is divided into a plurality of parts, and the divided parts are combined in the terminal device after being downloaded at different timings, or a distribution server for distributing the respective divided programs may be different. The term "computer-readable recording medium" further includes a medium that holds the program for a certain time, such as a volatile memory (RAM) in the computer system as a server or a client in a case where the program is transmitted via the network. In addition, the above-described program may be a program for realizing a part of the above-described functions. Further, the program may be a so-called difference file (difference program) in which the above-described functions can be realized in combination with the program already recorded in the computer system.

### Description of Symbols

- 30: touch panel display unit
- 31: display
- 32: panel sensor
- 43: vibration unit
- 44: sound output unit
- 100: information processing apparatus
- 101: contact parameter detection unit
- 102: controller
- 103: storage unit
- 111: movement speed detection portion
- 112: pen pressure detection portion
- 113: movement direction detection portion
- 114: inclination angle detection portion
- 121: application processing unit
- 122: feedback control unit
- 200: pen-shaped input device
- 201: controller
- 203: storage unit
- 221: drive control unit
- 231: feedback signal storage

## Claims

1. An information processing system comprising:
a contact parameter detection unit configured to detect one or more contact parameters corresponding to a contact state of a pen-shaped input device with respect to an operation target surface; and
a feedback control unit configured to:
determine a contact state of a pen tip of the pen-shaped input device with respect to the operation target surface based on the one or more contact parameters;
execute first feedback control of driving when the contact state is determined to be a moving state in which the pen tip of the pen-shaped input device is moving while in contact with the operation target surface, a tactile sensation reproduction part in the pen-shaped input device to reproduce a tactile sensation corresponding to the moving state; and
execute second feedback control of driving when the contact state is determined to be a movement start state in which the pen tip of the pen-shaped input device starts moving from a stationary state while in contact with the operation target surface, the tactile sensation reproduction part to reproduce a tactile sensation corresponding to the movement start state.

2. The information processing system according to claim 1, wherein the tactile sensation reproduction part includes a vibration unit configured to generate a vibration in response to input of a feedback signal.

3. The information processing system according to claim 1, wherein the tactile sensation reproduction part includes a sound output unit configured to output a sound in response to input of a feedback signal.

4. The information processing system according to any one of claims 1 to 3, wherein the second feedback control includes control of inputting a feedback signal corresponding to the second feedback control as an impulse signal to the tactile sensation reproduction part.

5. The information processing system according to any one of claims 1 to 3, wherein the second feedback control includes control of inputting a feedback signal corresponding to the second feedback control, which has a predetermined peak level at a predetermined time corresponding to a timing when the pen tip of the pen-shaped input device starts moving, to the tactile sensation reproduction part.

6. The information processing system according to any one of claims 1 to 3, wherein the one or more contact parameters are all or a part of a speed at which the pen tip moves on the operation target surface, a pressure of the pen tip on the operation target surface, a direction in which the pen tip moves on the operation target surface, and an inclination angle of the pen-shaped input device with respect to the operation target surface.

7. The information processing system according to claim 6, wherein the feedback control unit sets a level of a feedback signal corresponding to the second feedback control based on at least the pressure among the one or more contact parameters.

8. The information processing system according to claim 6, wherein the feedback control unit changes a level of a feedback signal corresponding to the first feedback control based on at least the speed among the one or more contact parameters.

9. An information processing method for an information processing system, the method comprising:
a contact parameter detection step of, via a contact parameter detection unit, detecting one or more contact parameters corresponding to a contact state of a pen-shaped input device with respect to an operation target surface; and
a feedback control step of, via a feedback control unit, determining a contact state of a pen tip of the pen-shaped input device with respect to the operation target surface based on the one or more contact parameters and executing first feedback control of driving when the contact state is determined to be a moving state in which the pen tip of the pen-shaped input device is moving while in contact with the operation target surface, a tactile sensation reproduction part in the pen-shaped input device to reproduce a tactile sensation corresponding to the moving state and second feedback control of driving when the contact state is determined to be a movement start state in which the pen tip of the pen-shaped input device starts moving from a stationary state while in contact with the operation target surface, the tactile sensation reproduction part to reproduce a tactile sensation corresponding to the movement start state.

10. The information processing method according to claim 9, wherein the tactile sensation reproduction part includes a vibration unit that generates a vibration in response to input of a feedback signal.

11. The information processing method according to claim 9, wherein the tactile sensation reproduction part includes a sound output unit that outputs a sound in response to input of a feedback signal.

12. The information processing method according to any one of claims 9 to 11, wherein the second feedback control controls inputting a feedback signal corresponding to the second feedback control as an impulse signal to the tactile sensation reproduction part.

13. The information processing method according to any one of claims 9 to 11, wherein the second feedback control controls inputting a feedback signal corresponding to the second feedback control, which has a predetermined peak level at a predetermined time corresponding to a timing when the pen tip of the pen-shaped input device starts moving, to the tactile sensation reproduction part.

14. The information processing method according to any one of claims 9 to 11, wherein the one or more contact parameters are all or a part of a speed at which the pen tip moves on the operation target surface, a pressure of the pen tip on the operation target surface, a direction in which the pen tip moves on the operation target surface, and an inclination angle of the pen-shaped input device with respect to the operation target surface.

15. A program for causing a computer in an information processing system to function as:
a contact parameter detection unit configured to detect one or more contact parameters corresponding to a contact state of a pen-shaped input device with respect to an operation target surface; and
a feedback control unit configured to determine a contact state of a pen tip of the pen-shaped input device with respect to the operation target surface based on the one or more contact parameters and execute first feedback control of driving, when the contact state is determined to be a moving state in which the pen tip of the pen-shaped input device is moving while in contact with the operation target surface, a tactile sensation reproduction part in the pen-shaped input device to reproduce a tactile sensation corresponding to the moving state and second feedback control of driving, at a timing when the contact state is determined to be a movement start state in which the pen tip of the pen-shaped input device starts moving from a stationary state while in contact with the operation target surface, the tactile sensation reproduction part to reproduce a tactile sensation corresponding to the movement start state.
